# EUROPEAN PATENT SPECIFICATION

(11) **EP 2 509 261 B1**
(45) Date of publication and mention of the grant of the patent: **30.10.2013**
(21) Application number: 11161663.7
(22) Date of filing: 08.04.2011
(51) Int. Cl.: H04L 12/24, H04L 12/26, H04L 12/701

(54) **Monitoring of a network element in a packet-switched network**
Überwachung eines Netzwerks in einem paketvermittelten Netzwerk
Surveillance d'un élément de réseau dans un réseau commuté par paquets

(43) Date of publication of application: 10.10.2012
(73) Proprietor: Alcatel Lucent, 75007 Paris (FR)
(72) Inventor: Vigoureux, Martin, 91620 Nozay (FR); Bui, Dinh Thai, 91620 Nozay (FR)
(74) Representative: Sciaux, Edmond

(56) References cited:
- US-A1- 2002 032 761
- US-A1- 2004 213 160
- US-A1- 2008 279 110
- US-A1- 2009 037 713
- US-A1- 2009 219 811
- US-B1- 6 560 648

## Description

### Field of the invention

The invention relates to the technical field of packet-switched networks, including IP and all flavors of MPLS communication systems.

### Background

In various types of telecommunication networks, packet-based traffic, especially Internet Protocol traffic, is expected to become the predominant traffic type. At the same time, the demand for bandwidth and for Quality of Service (QoS) guarantees keeps growing as new applications emerge. A unified control plane based on the Internet Protocol (IP), which can be deployed over a number of heterogeneous technologies, is seen as the best way to meet various challenges related to this situation by reducing the operation costs of the network by simplifying its management and reducing the amount of manual management, and by using resources efficiently, reducing the equipment costs of the network by reducing the number of independent management systems to be deployed, and meeting the QoS requirements, ensuring the scalability of the network and a high level of reliability and availability. The MPLS (Multi-Protocol Label Switching) and GMPLS (Generalized MPLS) suites of protocols provide the basis for such a unified control plane.

Whereas good management of an IP or IP-based network involves gathering information about various resources and capabilities of the network nodes, conventional discovery mechanisms based on OSPF-TE broadcasting information within a whole area consume significant amounts of network bandwidth and processing resources.

Within another Telecom environment, MPLS-TP (MPLS Transport Profile) is deployed over transport networks (e.g. SDH/SONET, WDM) that may not have an IP control plane. Instead, the management plane is used, in those environments, to setup the entire working topology as well as the protected topology. Automatic failure detection and automatic network reconfiguration are assured by the Operations, Administration and Maintenance (OAM) protocols within MPLS-TP environment. In this context, monitoring tools are important to ensure an error-free network configuration.

US-A-2009219811 discloses a method of monitoring end-to-end Quality-of-experience of services with application awareness, including: building an application specific service ping packet having an application identification field that identifies an application to which the application specific service ping packet corresponds; forwarding the application specific service ping packet towards a destination in a network; determining requested application-specific performance and resource metrics; collecting the requested application-specific performance and resource metrics; inserting the requested application-specific performance and resource metrics into the application specific service ping packet; and extracting the service ping packet from the network. Embodiments evaluate the effect of resources taken by other traffic currently present in a system for the application identified by a ping or for applications other than those identified by ping.

US-B-6560648 discloses a communication system includes a network, a first application running on a first Host coupled to the network, and a second application running on a second Host coupled to the network. The first application issues an Extended PING command for sending an Extended ECHO message from the First Host into the network and directed to the second application in the Second Host. The second application in the Second Host, in response to receiving the Extended ECHO message, issues an Extended PING command for sending an Extended ECHO reply message into the network and directed to the first application to measure the full loop-back network latency of communicating a message application-to-application across the network.

US-A-2002032761 discloses a method and system for detecting a physical device configuration inside a network node and displaying the configuration of a network in connection with a plurality of devices, in a network environment including SNMP-implemented intelligent network devices. ICMP echo requests are sent from an administrator terminal implementing an SNMP manager to individual network devices in the network node so that active devices are detected on the basis of responses therefrom. Then, transfer requests for information stored in the management information bases (MIB) of the respective devices are sent to the SNMP agents in the individual devices detected, so that the types of the devices in the network node are detected based on the information stored in the management information bases returned. A MIB access module is based on the implementation of SNMP MIB objects on each network device.

US-A-2009037713 discloses a method for operation, administration and maintenance (OAM), including: selecting an OAM type for a destination, where the destination is enabled for a service insertion architecture; encapsulating an OAM packet with the OAM type indicated in a service header therein; and sending the OAM packet to the destination.

US-A-2004213160 discloses a method of echo messaging for operation, administration, and management of a service-based distribution path and associated services. Service-based distribution paths or transport tunnels include services mapped or bound to a path associated with the transport tunnel. Echo messaging provides OAM capabilities to monitor the operational state of a service-based distribution path, including determining configuration, connectivity, and other characteristics of the path and associated services that transport data. OAM functions provided by echo messaging enable OAM functions despite service volume along a core network, path or set of paths.

US-A-2008279110 discloses a method for testing connectivity of a multi-segment pseudo-wire (MS-PW) in a network. The method comprises: sending an echo request message from a first provider edge (PE) device to a second PE device for a section of the MS-PW between the first PE device and the second PE device; the echo request message being identified as such by a control word contained therein; an inner label of the echo request message having a time-to-live (TTL) value set to a number of segments in the section; the TTL value for determining whether the control word is to be inspected as it traverses the section; upon the echo request message arriving at the second PE device, the second PE device recognizing the echo request message as such by inspecting the control word contained therein; and, receiving an echo reply message from the second PE device in response to the echo request message, the echo reply message confirming connectivity of the section.

### Summary

In an embodiment, the invention provides a method of monitoring a network element in a packet-switched network, comprising
receiving at the network element a Ping or Traceroute application message comprising a request object with an identifier,
determining that a destination address of the Ping or Traceroute application message is reached or a TTL parameter of the Ping or Traceroute application message is expired,
identifying a virtual link to which the received Ping or Traceroute application message relates,
looking-up an information base of the network element to find a record matching the identifier in the request object within a context associated to the identified virtual link and,
returning data retrieved from the record in the information base or an indication that no match was found, and
sending a response message to a source address of the Ping or Traceroute application message, wherein the response message comprises a response object comprising the retrieved data or indication.

The above method based on Ping or Traceroute application messages can serve to monitor any feature of a network element having an address and including operational features such as supported (implemented on the observed network element and activated) functionalities and quantitative features such as various network node resources (e.g. deduced from traffic or resource parameters) dedicated to the virtual link. The addressing scheme may be based on IP addresses or others, such as NSAP addresses, MAC addresses or else. The network element can be of any type depending on deployment scenario, e.g. an IP router, an IP host, an Ethernet switch, an MPLS LER or LSR, a WDM cross-connect and others.

According to embodiments, such a method of monitoring can comprise one or more of the features below.

In an embodiment, the identifier in the request object designates a functionality of the network element that the network element can execute in relation to the virtual link, wherein the information base comprises a list of functionalities supported by the network element, wherein the response object indicates whether the functionality designated by the identifier is found in the list of supported functionalities in relation to the virtual link.

With these features, it is possible to enquire about any supported functionality of the network element. It is noted that the set of supported functionalities of a network element can vary as a function of the virtual link to which the request is related. In embodiments, the designated functionality of the network element is selected in the group consisting of Path Computation Element functionality, Maintenance End Point functionality for MPLS-TP OAM, Maintenance Intermediate Point functionality for MPLS-TP OAM, Boundary Clock functionality for the Precision Time Protocol (IEEE1588-2008) and Transparent Clock functionality for the Precision Time Protocol (IEEE1588-2008).

In an embodiment, the identifier in the request object designates a resource parameter relating to an amount of network element resources dedicated or available to the virtual link. The information base comprises a traffic engineering database of the network element storing the resource parameters of the virtual links in which the network element is involved. The retrieved data comprises the resource parameter value.

A virtual link designates an abstraction defined in the network for the purpose of traffic engineering. It may or may not correspond to a physical link. It may also correspond to a bundle of physical links. Examples of virtual links include Virtual LANs (VLAN), Label-Switched Paths (LSP) in all flavors of MPLS, Tandem connections in MPLS-TP OAM, IP-Sec (IETF RFC 4303) tunnels, GRE (IETF RFC 2784) tunnels and others.

With these features, it is possible to enquire about any resource parameter related to a virtual link, e.g. bandwidth usage, storage resource usage, processing power usage of the virtual link and others. Such information can be obtained on a virtual link per virtual link basis, e.g. in the form of LSP-specific information, VLAN-specific information, TCME (Tandem Connection Maintenance Entity) LSP-specific information.

With the virtual link being identified, it is also possible to monitor features of the interface where the virtual link is implemented, such as available bandwidth, available storage and available processing power of the interface where the virtual link is implemented. Such resources can be considered available to the virtual link.

In embodiments, the designated resource parameter relates to an MPLS-TP Label-Switched Path (LSP) in which the network element takes part, wherein the designated traffic parameter is selected in the group consisting of an incoming label of the MPLS-TP Label-Switched Path and an outgoing label of the MPLS-TP Label-Switched Path at the network element. This feature may serve to check for site deployment validity with regards to an engineering plan, i.e. to ensure that both incoming and outgoing labels configured along a given MPLS-TP LSP are correct in respect of the engineering plan, e.g. in case of a statically configured LSP. A similar case of label validity check can also apply to GMPLS as the control plane is not congruent to the data plane.

In embodiments, the designated resource parameter relates to an MPLS Label-Switched Path in which the network element takes part, wherein the designated resource parameter is selected in the group consisting of a Class of Service, a Maximum Burst Size, a Mean Bit Rate, a Forwarding Class, a Committed Information Rate and a Peak Information Rate of the Label-Switched Path.

In an embodiment, the request object and the response object are Type-Length-Value objects, wherein a type value of the request object is different from a type value of the response object.

In an embodiment, the request object comprises a first Type-Length-Value sub-object containing the identifier as a type value, wherein the response object comprises a second Type-Length-Value sub-object having the same type value as the first Type-Length-Value sub-object.

The above method can be easily implemented in any network where a Ping or Traceroute application is already available, e.g. in pure IP networks or in MPLS networks of all flavors, including GMPLS and MPLS-TP.

In an embodiment, the Ping or Traceroute application message comprises an ICMP (Internet Control Message Protocol) echo message. Accordingly, the method may comprise the step of sending the Ping or Traceroute application message from a second network element of the communications network using the ICMP.

In an embodiment, the network element is a Label-Switched Router or Label Edge Router (LER) of an MPLS network, wherein the Ping or Traceroute application message comprises an MPLS Ping message or an MPLS Traceroute message. Accordingly, the method may comprise the step of sending the MPLS Ping message or the MPLS Traceroute message from a second Label-Switched Router or Label Edge Router of the an MPLS network.

In an embodiment, the invention also provides a network element for a packet-switched network, comprising
a communication interface for receiving and sending messages in data packets,
a data storage storing an information base of the network element, and
data processing means adapted to carry out the steps of:
determining that a Ping or Traceroute application message comprising a request object with an identifier is received,
determining that a destination address of the Ping or Traceroute application message is reached or a TTL parameter of the Ping or Traceroute application message is expired,
identifying a virtual link to which the received Ping or Traceroute application message relates,
looking-up the information base to find a record matching the identifier in the request object within a context related to the identified virtual link,
returning data retrieved from the record in the information base or an indication that no match was found, and
sending a response message to a source address of the Ping or Traceroute application message, wherein the response message comprises a response object comprising the retrieved data or indication.

In an embodiment, the invention also provides a packet-switched network comprising a first network element and a second network element, wherein the second network element comprises:
a communication interface for receiving and sending messages in data packets, and
data processing means adapted to carry out the steps of:
   sending the Ping or Traceroute application message comprising the request object with the identifier, wherein the source address of the message is set to an address of the second network element,
   receiving the response message from the first network element,
   extracting the retrieved data or indication from the response object, and
   generating a user-readable monitoring report to be stored in a log file or printed or displayed on a screen.

In an embodiment, the Ping or Traceroute application message sent by the second network element comprises a virtual link identifier. The virtual link identifier may take several form. It may take the form of a label in a packet header, e.g. in the case of in-band transport of MPLS ping and MPLS Traceroute messages. It may also take the form of a specific field or sub-object in the request object.

Aspects of the invention stem from the observation that conventional Ping and Traceroute applications are universally supported as they are part of the basic IP standards and MPLS family standards.

Aspects of the invention are based on the idea of in adding information to existing Ping applications (e.g. IP ping, LSP Ping in MPLS or MPLS-TP) and Traceroute applications (e.g. IP Traceroute, LSP Traceroute in MPLS or MPLS-TP) in order to request or to discover some specific capability or specific resource usage from selected nodes in relation to an observed virtual link.

Aspects of the invention are based on the idea of using IP Ping and IP Traceroute commands in combination with the loose or strict source routing option in order to discover node capabilities and node resources along a given constraint-routed path even before actually setting up an LSP along this path either dynamically using MPLS control plane or statically using MPLS-TP related management plane.

### Brief description of the drawings

These and other aspects of the invention will be apparent from and elucidated with reference to the embodiments described hereinafter, by way of example, with reference to the drawings.
Figure 1 is a functional representation of a communications network in which embodiments of the invention can be implemented.
Figure 2 is a flow diagram of a process performed by a destination network element in the network of Figure 1.
Figure 3 shows the format of request objects and response objects in an embodiment.
Figure 4 shows the format of sub-objects in the embodiment of Figure 3.

### Detailed description of the embodiments

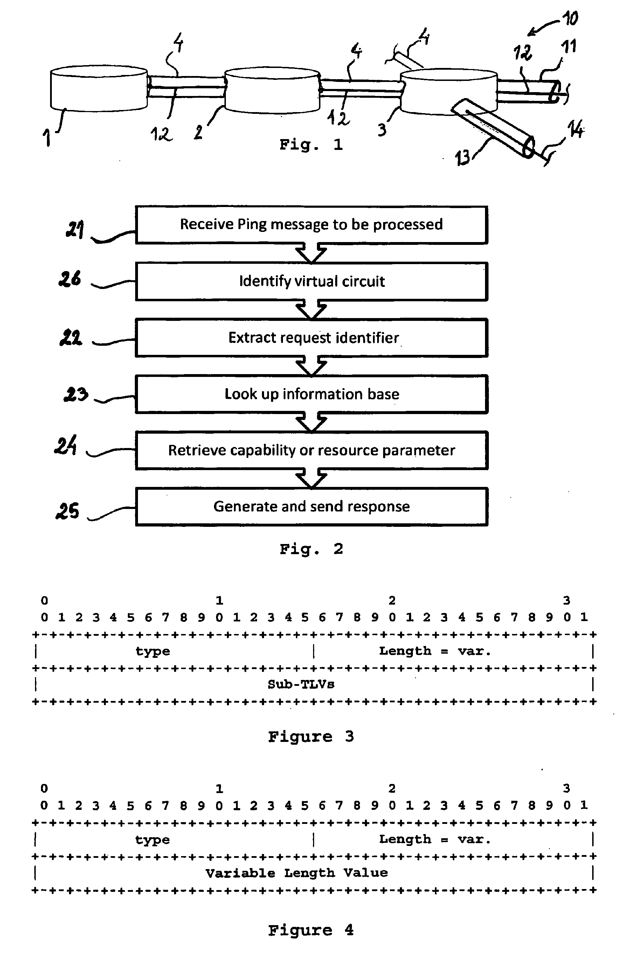

With reference to Figure 1, a packet-switched network 10 comprises a plurality of nodes 1, 2, 3 connected by physical links 4. The number of nodes, number of links and topology shown are purely illustrative and not limitative. The network 1 may include one or more domains. The data plane technology can be of any type that MPLS control planes or MPLS-TP management currently supports or will support in the future, e.g. all-optical, WDM, SONET, SDH, Ethernet, IP and others.

A first embodiment of a monitoring method will now be described, in which network nodes 1, 2, 3 support a modified Ping application based on ICMP Echo and Echo reply messages in an IP network. It is assumed that an end-user interacting with network node 1 wants to obtain some information about the functionality of network node 3, e.g. whether network node 3 supports a Path Computation Element (PCE) Communication Protocol with regards to the context of a virtual network or virtual link, as shown schematically at numeral 12.

It is assumed that every network element in the network comprises an information base of some sort where configuration data can be found, e.g. a simple configuration file in text format or a structured database. This information base is stored in a data repository of some sort, e.g. hard-drive, RAM or others. In an embodiment, the information base can take the form of a Management Information Base as defined in IETF documentation for the purpose of standardization.

To obtain the desired information, the end-user commands the network node 1 to send an augmented Ping message to an IP address of the network node 3. For example, the command could be entered on a console as:
*ping* -*capability_name IP*@ -*vitual_link*
where "IP@" represents an IP address of node 3, "-capability_name" is a string of character that specifies the monitoring request, and "virtual_link" is a string character that specifies the virtual link. For example, the string "-pcep" could be used to indicate monitoring of PCE capability by the destination node. The string "-Ipsec:123" could be used to indicate that the node is monitored with regards to the virtual network related to the IPSec tunnel number 123. This tunnel identifier provides a context of the request.

As a result, network node 1 generates a Ping message in the conventional manner with an additional request object that specifies a monitoring request. Namely, the Ping message may take the form of an ICMP echo packet with source IP address being an IP address of network node 1 and destination IP address being an IP address of network node 3. The message will then be forwarded in the conventional manner by intermediate network node 2.

Upon receiving the augmented Ping message, a message processor in network node 3 performs the steps shown on figure 2:
At step 21, it is detected that a Ping message intended for network node 3 was received. This detection may result from conventional processes, i.e. comparing the IP destination address with the local node IP address or TTL value becoming null after being decreased at least by one.

At step 26, the content of the Ping message is looked-up to identify a virtual link, to which the message relates. This identification can be carried out in several ways as will be described further below. Following the example given above, the tunnel IPSEC: 123 is identified at this step.

At step 22, the request object carried in the Ping message is extracted and decoded to identify the subject of the request. As will be explained below, this subject may be encoded using one or more predefined numbers or other strings of characters.

At step 23, the information base of the network element 3 is queried as a function of the subject identified at step 22. For qualitative monitoring requests that can be answered by a Yes or a No, e.g. monitoring of a capability of the node, the query could take the form of a search which returns a binary response like "match found" or "no match found". It is noted that other results of the query like a timeout or an "unknown data" response can also occur. For example, assuming that a configuration file of the network element comprises a list of all protocols supported by the network element formulated with predefined protocol names, the query consists in looking up the configuration field for the string PCEP or any other string that was predefined to designate the Path Computation Element Communication Protocol. The above look-up is carried out as a function of the virtual link identified at step 26, i.e. in the MIB related to the identified virtual link.

At step 24, the data returned from the information base as a result of the query is processed to generate a response object that carries the retrieved information in a predefined format. As will be explained below, the retrieved information may be encoded using one or more predefined numbers or other strings of characters. For example, if a match was found for the string PCEP in the configuration file, a specific flag is set to 1 in the response object, whereas it is set to 0 if no match was found.

At step 25, a response to the Ping message is generated in the conventional manner, and the response object is appended to the message payload. The response message is sent and routed to the sender in IP conventional manner. Namely, the response message may take the form of an ICMP Echo Reply packet with source IP address being an IP address of network node 3 and destination IP address being an IP address of network node 1.

Upon receiving the response message at network node 1, the Ping application proceeds to extract the response object and provide the corresponding information to the end-user in any suitable manner, e.g. displayed on a computer screen, recorded in a log file, printed on paper, sent by e-mail or other.

Quantitative information relating the destination node 3 can be obtained in the same manner. For example, the available bandwidth at a specific interface of network node 3 can be requested by sending the Ping message to an IP address of the intended virtual link with the additional request object specifying the available bandwidth as the subject of the monitoring request. In such a case, the data retrieved from the information base, if available, will include the value of available bandwidth bound to the specific virtual link in explicit or implicit units, e.g. 5Mbits/s, and that quantitative information will be inserted in the response object.

In an embodiment illustrated on Figure 3, the request object to be added into the ping message consists of a TLV (Type Length Value) structure which contains one sub-TLV for each monitoring request. The response object takes the same format.

In Figure 3, the TLV "Type" field takes one of four different values. In particular, different types are assigned to the TLV contained in the ping message and to the TLV contained in the corresponding response message. This is to ensure that the replying node actually understands the request and to avoid any misinterpretation of simple copies of the request message. In addition, different types are assigned to so-called capability requests i.e. requests relating to qualitative information, i.e. whether the node has a given capability, and so-called resource requests, i.e. requests relating to qualitative information, e.g. measurement of resources dedicated to a given connection or interface. Hence, the four different values may be reserved as follow:
- capability request TLV: type=0xXX,
- capability response TLV: type=0xYY,
- resource request TLV: type=0xZZ,
- resource response TLV: type=0xWW,
where XX, YY, ZZ, WW represent different predefined numbers.

The TLV "Value" field of Figure 3 contains one or more sub-objects that have the format shown on Figure 4, i.e. also a TLV structure.

In Figure 4, the Sub-TLV "Type" field may be formed as follows:
- for capability requests and responses, a different sub-TLV type number is assigned to each capability for which a node can be monitored. As used herein, the term capability refers to the ability to execute a given functionality. A same type number could be used in both the sub-object of the request object and the sub-object of the corresponding response object. The presence of a sub-TLV of a given type in the response message from a given node can serve as an implicit positive response, i.e. meaning that this node supports the capability indicated by the type number.

Below is an illustrative list of capabilities that could be assigned respective sub-TLV type numbers: Path Computation Element functionality, Maintenance End Point functionality for MPLS-TP, Maintenance Intermediate Point functionality for MPLS-TP, Transparent Clock functionality for PTP, Boundary Clock functionality for PTP.
- for resource requests and responses, a different sub-TLV type number is assigned to each quantitative parameter for which a node can be monitored. Again, a same type number could be used in both the sub-object of the request object and the sub-object of the corresponding response object. The presence of a sub-TLV of a given type in the response message from a given node simply means that this node supports the monitoring method, i.e. managed to extract and decode the request object. However, the quantitative response, if any, is indicated in the Sub-TLV "Value" field. Namely, the value field contains the indication on the parameter value.

Below is an illustrative list of resource parameters that could be assigned respective sub-TLV type numbers: incoming label on incoming link, outgoing label on next hop, percentage of incoming link bandwidth usage, Class of Service, Maximum Burst Size, Mean Bit Rate, Forwarding Class, Committed Information Rate and Peak Information Rate. Here, the incoming link refers to the link through which the ping message was received at destination.

In capability requests and responses, the Sub-TLV "Value" field can be null or it may also serve to provide more details on the capability, e.g. options or limitations of the monitored capability.

The ability to monitor the resource usage of a node is mostly useful if the monitoring request can be targeted to a given virtual link. For that purpose, several methods are available.

The method which has just been described can be extended to other types of Ping applications, e.g. MPLS ping. Request objects and response objects can be formatted and processed in mostly the same manner. By contrast with IP ping applications, an MPLS ping message is transported by the OAM messages thus in-band with regards to a given LSP. As a consequence, the request object carried in the MPLS ping message is received by the destination node in the context of a given LSP. This context serves to further specify the monitoring request at step 26. Namely, at step 22, the receiving node will interpret the request object in the context of the LSP on which the message was received and, at step 23, corresponding information that is specific to the LSP will be retrieved from the information base. In an embodiment, traffic parameters of a specific LSP, such as bandwidth usage, are retrieved from a traffic engineering database.

A corresponding embodiment is shown on figure 1, where network node 3 takes part in two LSPs 12 and 14 having different routes. Accordingly, it is possible to monitor the amount of resources dedicated in network node 3 to a selected one of the LSPs, e.g. memory, processing power, bandwidth or other resources, by sending the Ping message through the selected LSP. Links 11 and 13 connect node 3 to further portions of network 10 not shown. The respective LSPs may be carried by different physical links as shown or by the same physical links.

In MPLS-TP, Ping messages are part of OAM traffic, which is carried in-band, namely in a tandem connection that relies on the same resources as those which serve to transfer data traffic in the corresponding LSP. As a consequence, the LSP to be monitored is defined by the label-stack of the OAM packets that carries the Ping application message and can be identified by the destination node of the Ping message on that basis at step 26.

The ability to target the Ping application message to a given virtual link may also be implemented with an explicit identification, for example for packet-switched network in which OAM is carried out-of-band. In that case, a specific virtual link identifier is appended to the Ping application message by the sending node and decoded by the destination node to identify the targeted virtual link. A suitable commands to generate such an augmented Ping message at the sending node could be:
Ping IP@ -lsp #LSP -options or
Ping IP@ -vlan #VLAN -options ,
where #LSP is an LSP Id and #VLAN is a VLAN Id.

As Traceroute applications are mostly based on the same types of messages as ping applications, the monitoring methods which have just been described can be extended to Traceroute applications, so as to monitor a given property at all nodes between the source node and the destination node. In case of Traceroute messages being sent from node 1 to node 3, the intermediate node 2 will detect that it must process a Traceroute message based on the expired TTL and/or the UDP port number, as known in the art. For the rest, the operations in node 2 can be essentially the same as in node 3.

For backward compatibility, network nodes which do not support the monitoring method can simply ignore the request object. As it is part of the packet payload, the default behavior from the node is expected.

Elements such as the processing means could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method of monitoring a network element (3) in a packet-switched network (10), comprising
receiving at the network element (3) a Ping or Traceroute application message comprising a request object with an identifier,
determining (21) that a destination address of the Ping or Traceroute application message is reached or a TTL parameter of the Ping or Traceroute application message is expired,
identifying (26) a virtual link to which the received Ping or Traceroute application message relates,
looking-up (23) an information base of the network element to find a record matching the identifier in the request object within a context associated to the identified virtual link ,
returning (24) data retrieved from the record in the information base or an indication that no match was found, and
sending (25) a response message to a source address (1) of the Ping or Traceroute application message, wherein the response message comprises a response object comprising the retrieved data or indication.

2. A method in accordance with claim 1, wherein the identifier in the request object designates a functionality of the network element that the network element can execute in relation to the virtual link, wherein the information base comprises a list of functionalities supported by the network element, wherein the response object indicates whether the functionality designated by the identifier is found in the list of supported functionalities in relation to the virtual link.

3. A method in accordance with claim 2, wherein the designated functionality of the network element is selected in the group consisting of Path Computation Element functionality, Maintenance End Point functionality for MPLS-TP, Maintenance Intermediate Point functionality for MPLS-TP, Boundary Clock functionality for IEEE 1588-2008, and Transparent Clock functionality for IEEE 1588-2008.

4. A method in accordance with claim 1, wherein the identifier in the request object designates a resource parameter relating to an amount of resources of the network element dedicated or available to the virtual link, wherein the information base comprises a traffic engineering database the network element storing the resource parameters of the virtual links in which the network element is involved, wherein the retrieved data comprises the resource parameter value.

5. A method in accordance with claim 4, wherein the designated resource parameter relates to an MPLS-TP Label-Switched Path in which the network element takes part, wherein the designated traffic parameter is selected in the group consisting of a incoming label of the MPLS-TP Label-Switched Path and an outgoing label of the MPLS-TP Label-Switched Path at the network element.

6. A method in accordance with claim 4, wherein the designated resource parameter relates to an MPLS Label-Switched Path in which the network element takes part, wherein the designated resource parameter is selected in the group consisting of a Class of Service, a Maximum Burst Size, a Mean Bit Rate, a Forwarding Class, a Committed Information Rate and a Peak Information Rate of the Label-Switched Path.

7. A method in accordance with any one of claims 1 to 6, wherein the request object and the response object are Type-Length-Value objects, wherein a type value of the request object is different from a type value of the response object.

8. A method in accordance with claim 7, wherein the request object comprises a first Type-Length-Value sub-object containing the identifier as a type value, wherein the response object comprises a second Type-Length-Value sub-object having the same type value as the first Type-Length-Value sub-object.

9. A method in accordance with any one of claims 1 to 8, wherein the Ping or Traceroute application message comprises an ICMP echo message.

10. A method in accordance with claim 9, further comprising the step of sending the Ping or Traceroute application message from a second network element of the communications network using an ICMP application.

11. A method in accordance with any one of claims 1 to 8, wherein the network element is a Label-Switched Router or Label Edge Router of an MPLS network, wherein the Ping or Traceroute application message comprises an MPLS Ping message or an MPLS Traceroute message.

12. A method in accordance with claim 11, further comprising the step of sending the MPLS Ping message or the MPLS Traceroute message from a second Label-Switched Router (1) or Label Edge Router of the MPLS network.

13. A network element (3) for a packet-switched network, comprising
a communication interface (4) for receiving and sending messages in data packets,
a data storage storing an information base of the network element, and
data processing means adapted to carry out the steps of:
determining that a Ping or Traceroute application message comprising a request object with an identifier is received,
determining (21) that a destination address of the Ping or Traceroute application message is reached or a TTL parameter of the Ping or Traceroute application message is expired,
identifying (26) a virtual link to which the received Ping or Traceroute application message relates,
looking-up (23) the information base to find a record matching the identifier in the request object within a context associated to the identified virtual link,
returning (24) data retrieved from the record in the information base or an indication that no match was found, and
sending (25) a response message to a source address of the Ping or Traceroute application message, wherein the response message comprises a response object comprising the retrieved data or indication.

14. A packet-switched network (10) comprising a first network element (3) in accordance with claim 13 and a second network element (1), wherein the second network element comprises:
a communication interface (4) for receiving and sending messages in data packets, and
data processing means adapted to carry out the steps of:
sending the Ping or Traceroute application message comprising the request object with the identifier, wherein the source address of the message is set to an address of the second network element,
receiving the response message from the first network element,
extracting the retrieved data or indication from the response object, and
generating a user-readable monitoring report to be stored in a log file or printed or displayed on a screen.

15. A packet-switched network (10) in accordance with claim 14, wherein the Ping or Traceroute application message sent by the second network element (1) comprises a virtual link identifier.

## Patentansprüche

1. Verfahren zur Überwachung eines Netzwerkelements (3) in einem paketvermittelten Netzwerk (10), umfassend:
Empfangen, an dem Netzwerkelement (3), einer Ping- oder Traceroute-Anwendungsnachricht, welche ein Anforderungsobjekt mit einer Kennung umfasst,
Bestimmen (21), dass eine Zieladresse der Ping- oder Traceroute-Anwendungsnachricht erreicht wurde oder ein TTL-Parameter der Ping- oder Traceroute-Anwendungsnachricht abgelaufen ist,
Identifizieren (26) einer virtuellen Verbindung, auf welche sich die empfangene Ping- oder Traceroute-Anwendungsnachricht bezieht,
Durchsuchen (23) einer Informationsbasis des Netzwerkelements nach einem Datensatz,
welcher mit der Kennung im Anforderungsobjekt übereinstimmt, innerhalb eines mit der identifizierten virtuellen Verbindung assoziierten Kontextes,
Rücksenden (24) der aus dem Datensatz in der Informationsbasis abgerufenen Daten oder einer Angabe, dass keine Übereinstimmung gefunden wurde, und
Senden (25) einer Antwortnachricht an die Quelladresse (1) der Ping- oder Traceroute-Anwendungsnachricht, wobei die Antwortnachricht ein Antwortobjekt mit den abgerufenen Daten oder der Angabe enthält.

2. Verfahren nach Anspruch 1, wobei die Kennung in dem Anforderungsobjekt eine Funktionalität des Netzwerkelements, welche von dem Netzwerkelement in Bezug auf die virtuelle Verbindung ausgeführt werden kann, bezeichnet, wobei die Informationsbasis eine Liste von von dem Netzwerkelement unterstützten Funktionalitäten enthält, wobei das Antwortobjekt angibt, ob die von der Kennung bezeichnete Funktionalität in der Liste von unterstützten Funktionalitäten in Bezug auf die virtuelle Verbindung gefunden wurde.

3. Verfahren nach Anspruch 2, wobei die bezeichnete Funktionalität des Netzwerkelements in der Gruppe bestehend aus Pfadberechnungselement-Funktionalität, Wartungsendpunkt-Funktionalität für MPLS-TP, Wartungszwischenpunkt-Funktionalität für MPLS-TP, Grenztakt-Funktionalität für IEEE-1588-2008 und Transparenttakt-Funktionalität für IEEE 1588-2008 ausgewählt wird.

4. Verfahren nach Anspruch 1, wobei die Kennung in dem Anforderungsobjekt einen sich auf eine für die virtuelle Verbindung dedizierte oder verfügbare Menge von Ressourcen des Netzwerkelements beziehenden Ressourcenparameter bezeichnet, wobei die Informationsbasis eine verkehrstechnische Datenbank umfasst, wobei das Netzwerkelement die Ressourcenparameter der virtuellen Verbindungen, in welche das Netzwerkelement einbezogen ist, speichert, wobei die abgerufenen Daten den Ressourcenparameterwert umfassen.

5. Verfahren nach Anspruch 4, wobei sich der bezeichnete Ressourcenparameter auf einen labelvermittelten MPLS-TP-Pfad, an welchem das Netzwerkelement beteiligt ist, bezieht, wobei der bezeichnete Verkehrsparameter in der Gruppe bestehend aus einem eingehenden Label des labelvermittelten MPLS-TP-Pfads und einem ausgehenden Label des labelvermittelten MPLS-TP-Pfads am Netzwerkelement ausgewählt wird.

6. Verfahren nach Anspruch 4, wobei sich der bezeichnete Ressourcenparameter auf einen labelvermittelten MPLS-TP-Pfad, an welchem das Netzwerkelement beteiligt ist, bezieht, wobei der bezeichnete Verkehrsparameter in der Gruppe bestehend aus einer Dienstklasse, einer maximalen Burst-Größe, einer mittleren Bitrate, einer Weiterleitungsklasse, einer vereinbarten Informationsrate und einer Spitzen-Informationsrate des labelvermittelten Pfads ausgewählt wird.

7. Verfahren nach einem beliebigen der Ansprüche 1 bis 6, wobei das Anforderungsobjekt und das Antwortobjekt Typ-Länge-Wert-Objekte sind, wobei sich ein Typenwert des Anforderungsobjektes von einem Typenwert des Antwortobjektes unterscheidet.

8. Verfahren nach Anspruch 7, wobei das Anforderungsobjekt ein erstes Typ-Länge-Wert-Unterobjekt, welches die Kennung als einen Typenwert enthält, umfasst, wobei das Antwortobjekt ein zweites Typ-Länge-Wert-Unterobjekt mit demselben Typenwert als das erste Typ-Länge-Wert-Unterobjekt umfasst.

9. Verfahren nach einem beliebigen der Ansprüche 1 bis 8, wobei die Ping-oder Traceroute-Anwendungsnachricht eine ICMP-Echo-Nachricht umfasst.

10. Verfahren nach Anspruch 9, weiterhin umfassend den Schritt des Sendens einer Ping- oder Traceroute-Anwendungsnachricht von einem zweiten Netzwerkelement des Kommunikationsnetzwerks unter Verwendung einer ICMP-Anwendung.

11. Verfahren nach einem beliebigen der Ansprüche 1 bis 8, wobei das Netzwerkelement ein Label Switch Router oder ein Label Edge Route eines MPLS-Netzwerks ist, wobei die Ping- oder Traceroute-Anwendungsnachricht eine MPLS-Ping-Nachricht oder eine MPLS-Traceroute-Nachricht umfasst.

12. Verfahren nach Anspruch 11, weiterhin umfassend den Schritt des Sendens der MPLS-Ping-Nachricht oder der MPLS-Traceroute-Nachricht von einem zweiten Label-Switched Router (1) oder Label Edge Router des MPLS-Netzwerks.

13. Netzwerkelement (3) für ein paketvermitteltes Netzwerk, umfassend
eine Kommunikationsschnittstelle (4) zum Empfangen und Senden von Nachrichten in Datenpaketen,
einen Datenspeicher zum Speichern einer Informationsbasis des Netzwerkelements, und Datenverarbeitungsmittel, welche für das Durchführen der folgenden Schritte ausgelegt sind:
Bestimmen, dass eine Ping- oder Traceroute-Anwendungsnachricht, welche ein Anforderungsobjekt mit einer Kennung enthält, empfangen wurde,
Bestimmen, (21), dass eine Zieladresse der Ping- oder Traceroute-Anwendungsnachricht erreicht wurde oder ein TTL-Parameter der Ping- oder Traceroute-Anwendungsnachricht abgelaufen ist,
Identifizieren (26) einer virtuellen Verbindung, auf welche sich die empfangene Ping- oder Traceroute-Anwendungsnachricht bezieht,
Durchsuchen (23) der Informationsbasis nach einem Datensatz, welcher mit der Kennung im Anforderungsobjekt übereinstimmt, innerhalb eines mit der identifizierten virtuellen Verbindung assoziierten Kontextes,
Rücksenden (24) der aus dem Datensatz in der Informationsbasis abgerufenen Daten oder einer Angabe, dass keine Übereinstimmung gefunden wurde, und
Senden (25) einer Antwortnachricht an die Quelladresse der Ping- oder Traceroute-Anwendungsnachricht, wobei die Antwortnachricht ein Antwortobjekt mit den abgerufenen Daten oder der Angabe enthält.

14. Paketvermitteltes Netzwerk (10) mit einem ersten Netzwerkelement (3) gemäß Anspruch 13 und einem zweiten Netzwerkelement (1), wobei das zweite Netzwerkelement umfasst:
eine Kommunikationsschnittstelle (4) zum Empfangen und Senden von Nachrichten in Datenpaketen, und
Datenverarbeitungsmittel, welche für das Durchführen der folgenden Schritte ausgelegt sind:
Senden der Ping- oder Traceroute-Anwendungsnachricht, welche das Anforderungsobjekt mit der Kennung enthält, wobei die Quelladresse der Nachricht auf eine Adresse des zweiten Netzwerkelements eingestellt ist,
Empfangen der Antwortnachricht von dem ersten Netzwerkelement, und
Extrahieren der abgerufenen Daten oder der Angabe aus dem Antwortobjekt, und
Erzeugen eines benutzerlesbaren Überwachungsberichts, welcher in einer Log-Datei gespeichert, ausgedruckt oder auf einem Bildschirm angezeigt werden kann.

15. Paketvermitteltes Netzwerk (10) nach Anspruch 14, wobei die von dem zweiten Netzwerkelement (1) gesendete Ping- oder Traceroute-Anwendungsnachricht eine virtuelle Verbindungskennung enthält.

## Revendications

1. Procédé de surveillance d'un élément de réseau (3) dans un réseau de commutation de paquets (10), comprenant les étapes suivantes
recevoir au niveau de l'élément de réseau (3) un message d'application Ping ou Traceroute comprenant un objet de demande avec un identifiant,
déterminer (21) qu'une adresse de destination du message d'application Ping ou Traceroute est atteinte ou qu'un paramètre TTL du message d'application Ping ou Traceroute a expiré,
identifier (26) une liaison virtuelle à laquelle le message d'application Ping ou Traceroute reçu se rapporte,
consulter (23) une base d'informations de l'élément de réseau pour trouver un enregistrement correspondant à l'identifiant dans l'objet de demande dans un contexte associé à la liaison virtuelle identifiée,
renvoyer (24) des données récupérées à partir de l'enregistrement dans la base d'informations ou une indication qu'aucune correspondance n'a été trouvée, et
envoyer (25) un message de réponse à une adresse source (1) du message d'application Ping ou Traceroute, le message de réponse comprenant un objet de réponse comprenant les données récupérées ou l'indication.

2. Procédé selon la revendication 1, dans lequel l'identifiant dans l'objet de demande désigne une fonctionnalité de l'élément de réseau que l'élément de réseau peut exécuter en relation avec la liaison virtuelle, dans lequel la base d'informations comprend une liste de fonctionnalités prises en charge par l'élément de réseau, dans lequel l'objet de réponse indique si la fonctionnalité désignée par l'identifiant est trouvée dans la liste de fonctionnalités prises en charge en relation avec la liaison virtuelle.

3. Procédé selon la revendication 2, dans lequel la fonctionnalité désignée de l'élément de réseau est sélectionnée dans le groupe constitué d'une fonctionnalité d'élément de calcul de chemin, d'une fonctionnalité de point d'extrémité de maintenance pour MPLS-TP, d'une fonctionnalité de point intermédiaire de maintenance pour MPLS-TP, d'une fonctionnalité d'horloge de frontière pour IEEE 1588-2008, et d'une fonctionnalité d'horloge transparente pour IEEE 1588-2008.

4. Procédé selon la revendication 1, dans lequel l'identifiant dans l'objet de demande désigne un paramètre de ressource relatif à une quantité de ressources de l'élément de réseau dédiées ou à la disposition de la liaison virtuelle, dans lequel la base d'informations comprend une base de données d'ingénierie de trafic, l'élément de réseau stockant les paramètres de ressource des liaisons virtuelles dans lesquelles l'élément de réseau est impliqué, dans lequel les données récupérées comprennent la valeur des paramètres de ressource.

5. Procédé selon la revendication 4, dans lequel le paramètre de ressource désigné se rapporte à un chemin à commutation d'étiquettes MPLS-TP auquel l'élément de réseau participe, dans lequel le paramètre de trafic désigné est sélectionné dans le groupe constitué d'une étiquette d'entrée du chemin à commutation d'étiquettes MPLS-TP et d'une étiquette de sortie du chemin à commutation d'étiquettes MPLS-TP au niveau de l'élément de réseau.

6. Procédé selon la revendication 4, dans lequel le paramètre de ressource désigné se rapporte à un chemin à commutation d'étiquettes MPLS auquel l'élément de réseau participe, dans lequel le paramètre de ressource désigné est sélectionné dans le groupe constitué d'une classe de service, d'une taille maximale de rafale, d'un débit binaire moyen, d'une classe de transfert, d'un débit d'informations garanti et d'un débit d'informations maximum du chemin à commutation d'étiquettes.

7. Procédé selon l'une quelconque des revendications 1 à 6, dans lequel l'objet de demande et l'objet de réponse sont des objets de type-longueur-valeur, dans lequel une valeur de type de l'objet de demande est différente d'une valeur de type de l'objet de réponse.

8. Procédé selon la revendication 7, dans lequel l'objet de demande comprend un premier sous-objet de type-longueur-valeur contenant l'identifiant comme valeur de type, dans lequel l'objet de réponse comprend un deuxième sous-objet de type-longueur-valeur ayant la même valeur de type que le premier sous-objet de type-longueur-valeur.

9. Procédé selon l'une quelconque des revendications 1 à 8, dans lequel le message d'application Ping ou Traceroute comprend un message d'écho ICMP.

10. Procédé selon la revendication 9, comprenant en outre l'étape d'envoi du message d'application Ping ou Traceroute à partir d'un deuxième élément de réseau du réseau de communication en utilisant une application ICMP.

11. Procédé selon l'une quelconque des revendications 1 à 8, dans lequel l'élément de réseau est un routeur à commutation d'étiquettes ou un routeur de bord d'étiquette d'un réseau MPLS, dans lequel le message d'application Ping ou Traceroute comprend un message Ping MPLS ou un message Traceroute MPLS.

12. Procédé selon la revendication 11, comprenant en outre l'étape d'envoi du message Ping MPLS ou du message Traceroute MPLS à partir d'un deuxième routeur à commutations d'étiquettes (1) ou d'un routeur de bord d'étiquette du réseau MPLS.

13. Élément de réseau (3) pour un réseau à commutation de paquets, comprenant une interface de communication (4) pour recevoir et envoyer des messages en paquets de données, un stockage de données stockant une base d'informations de l'élément de réseau, et des moyens de traitement de données adaptés pour exécuter les étapes suivantes :
déterminer qu'un message d'application Ping ou Traceroute comprenant un objet de demande avec un identifiant est reçu,
déterminer (21) qu'une adresse de destination du message d'application Ping ou Traceroute est atteinte ou qu'un paramètre TTL du message d'application Ping ou Traceroute a expiré,
identifier (26) une liaison virtuelle à laquelle le message d'application Ping ou Traceroute reçu se rapporte,
consulter (23) la base d'informations pour trouver un enregistrement correspondant à l'identifiant dans l'objet de demande dans un contexte associé à la liaison virtuelle identifiée,
renvoyer (24) des données récupérées à partir de l'enregistrement dans la base d'informations ou une indication qu'aucune correspondance n'a été trouvée, et
envoyer (25) un message de réponse à une adresse source du message d'application Ping ou Traceroute, le message de réponse comprenant un objet de réponse comprenant les données récupérées ou l'indication.

14. Réseau de commutation de paquets (10) comprenant un premier élément de réseau (3) selon la revendication 13 et un deuxième élément de réseau (1), le deuxième élément de réseau comprenant :
une interface de communication (4) pour recevoir et envoyer des messages en paquets de données, et des moyens de traitement de données adaptés pour exécuter les étapes suivantes :
envoyer le message d'application Ping ou Traceroute comprenant l'objet de demande avec l'identifiant, dans lequel l'adresse source du message est définie sur une adresse du deuxième élément de réseau,
recevoir le message de réponse à partir du premier élément de réseau,
extraire les données récupérées ou l'indication de l'objet de réponse, et
générer un rapport de surveillance lisible par un utilisateur à stocker dans un fichier journal ou à imprimer ou à afficher sur un écran.

15. Réseau de commutation de paquets (10) selon la revendication 14, dans lequel le message d'application Ping ou Traceroute envoyé par le deuxième élément de réseau (1) comprend un identifiant de liaison virtuelle.
